# EUROPÄISCHE PATENTSCHRIFT

(11) **EP 1 967 499 B1**
(45) Veröffentlichungstag und Bekanntmachung des Hinweises auf die Patenterteilung: **01.04.2015**
(21) Anmeldenummer: 08151506.6
(22) Anmeldetag: 15.02.2008
(51) Int. Cl.: C03C 10/00, C03C 17/00, C03C 17/25, C03C 17/34, C03C 23/00, C03B 23/023, C03B 32/02, G05B 19/416

(54) **Verfahren zur Herstellung einer beschichteten dreidimensional verformten Scheibe aus Glaskeramik**
Method for producing a coated three dimensional reformed disk out of ceramic glass
Procédé de fabrication d'un disque déformé tridimensionnel revêtu en céramique de verre

(30) Priorität: 28.02.2007 DE 102007010706; 02.08.2007 DE 102007036407
(43) Veröffentlichungstag der Anmeldung: 10.09.2008
(73) Patentinhaber: Schott AG, 55122 Mainz (DE)
(72) Erfinder: Waldschmidt, Holger, 55234 Nieder-Wiesen (DE); Krieg, Tino, 55129 Mainz (DE); Walther, Marten, 31061 Alfeld (DE)
(74) Vertreter: Mehler Achler

(56) Entgegenhaltungen:
- DE-A1- 10 102 576
- DE-C1- 10 039 027
- US-A- 3 775 085
- US-A- 4 102 666
- US-A- 5 618 764
- US-A1- 2003 211 335
- I. Strawbridge: "Glass Formation by the Sol-Gel-Process" In: A. Paul: "Chemistry of Glasses", 1990, XP002609939, ISBN: 0-412-27820-0 * pages 80-81 *

## Beschreibung

Die Erfindung betrifft die Herstellung einer beschichteten dreidimensional verformten Scheibe aus Glaskeramik.

Scheiben aus Glaskeramik finden vor allem als Sichtscheiben Verwendung und sind in der Regel einteilig ausgeführt. Sie können nicht nur flach sein, sondern auch dreidimensional verformt sein, z.B. winklig, mehrfach winklig, bauchig usw., sowie Mischformen davon. Dreidimensional verformte Glaskeramikscheiben werden hergestellt, indem das Grünglas gebogen und anschließend keramisiert wird. Bei einfachen Formen ist mitunter auch eine Verformung unter gleichzeitiger Keramisierung möglich. Die Herstellung einer Glaskeramik erfolgt bekanntermaßen derart, dass ein sogenanntes Grünglas, das eine zur Umwandlung in Glaskeramik geeignete Zusammensetzung besitzt, einem Keramisierungsverfahren unterzogen wird. Das Keramisierungsverfahren besteht darin, zunächst das Glas auf die Keimbildungstemperatur zu erhitzen und anschließend in den Keramisierungsschritt bei höherer Temperatur mit Hilfe der gebildeten Kristallkeime die Keramisierung durchzuführen.

Die gebildete Glaskeramik ist besonders widerstandsfähig gegen Wärme und Temperaturwechsel, was sie für viele Anwendungszwecke, insbesondere als Sichtscheiben besonders geeignet macht.

Glaskeramikscheiben finden unter anderem Verwendung in der Beleuchtungsindustrie, z.B. als Abdeckscheiben für leistungsfähige Lichtquellen, als Scheiben in Raumheizgeräten, als (Back-)Ofentüren oder als Scheiben in Backofentüren, als Herdplatten in Glaskeramik-Herden und in vielen anderen Anwendungen, wo eine gute Temperaturwechselbeständigkeit und eine gute mechanische Festigkeit erforderlich sind.

In neuerer Zeit kommen Glaskeramikscheiben auch vermehrt als Sichtscheiben in Kaminen zur Anwendung, bei denen der Funkenflug bzw. das Spritzen von glühenden Teilchen in den Wohnraum mittels einer durchsichtigen Scheibe verhindert wird. Die Scheibe lässt dabei aber die Beobachtung des Flammenspiels zu. Auch bei Kaminöfen wird häufig eine Sichtscheibe eingebaut, um einen Blick auf das Feuer bzw. die Glut zu ermöglichen. Die Sichtscheibe besteht in bekannter Weise überwiegend aus einer farblosen Glaskeramik. Dabei besteht die Möglichkeit, entweder die Sichtscheibe in einen Türrahmen, z.B. einen metallischen Türrahmen einzubauen oder die Sichtscheibe ohne Rahmen direkt als Tür oder Fenster zum Verschließen des Brennraumes zu nutzen.

Vielfach werden die Glaskeramikscheiben nach ihrer Herstellung mit einer insbesondere reflektierenden Beschichtung versehen. Damit erzielt man den ästhetischen Effekt, dass man zwar bei Betrieb der Lichtquelle, des Kamins oder des Ofens die Flamme bzw. das Licht sehen kann, dass aber bei ausgeschalteter Strahlungsquelle bzw. erloschenem Feuer der Raum hinter der Scheibe im Dunkel bleibt und dadurch z.B. die wenig attraktive innere Struktur des Ofens bzw. Kamins unsichtbar ist, wie es z.B. in US 2006/0024509 A1 beschrieben ist.

Die Beschichtung der Glaskeramik erfolgt nach den üblichen Verfahren, insbesondere durch Pyrolyse von Pulvern, Flüssigkeiten oder Gas, durch Verdampfen oder durch Sputtern. Ferner durch plasmaunterstützte Abscheidemethoden, durch reaktives Sputtern von geeigneten Metallen in Gegenwart von Sauerstoff und/oder Stickstoff und dergleichen.

Die aufgebrachten Schichten können in an sich bekannter Weise Einfachschichten, z.B: ITO zur Reflexion von IR-Strahlung, oder auch Mehrfachschichten sein, z.B. Interferenzschichtsysteme aus mehreren hoch- und niedrig brechenden Schichten mit einer Schichtdicke im Bereich von jeweils etwa einem Viertel der mittleren Wellenlänge des Lichts, die je nach Aufbau und Schichtdicke für den Betrachter eine Farbe von blausilbem bis goldfarben in der Aufsicht aufweisen. Die Schichtsysteme sollen kratzfest sein, damit sie ohne Beschädigung gereinigt werden können, weiche Schichten werden vorzugsweise mit einer harten Deckschicht vor Verkratzung geschützt.

Während die Beschichtung planer Glaskeramikscheiben verfahrenstechnisch relativ einfach ist und auf den üblichen Beschichtungsanlagen für Flachglas vorgenommen werden kann, ist die Beschichtung dreidimensional verformter Glaskeramikscheiben, z.B. hergestellt gemäß DE 100 39 027 C1, wesentlich aufwendiger, da für eine gleichmäßige Beschichtung die Geometrie der Beschichtungsanlage der jeweiligen Form angepasst werden muss.

Bei gebogenen Windschutzscheiben von Automobilen ist es bekannt, diese vordem Biegen mit einer Email-Farbe zu beschichten, die während des Biegevorganges eingebrannt wird. Das ist allerdings wegen der hohen Keramisierungstemperatur sowie wegen des Schrumpfs der Glaskeramik während der Keramisierung bei Glaskeramikartikeln nicht möglich.

Auch aus der aus Gründen der Festigkeitssteigerung bei Quarzglas-Artikeln mittels einer dotierten Qarzglasaufschlämmung erzeugten Oberflächenkristallisation in dem Quarzglasartikel, wie es in US-A-2003/0211335 beschrieben ist, lassen sich keine Anhaltspunkt entnehmen, wie ein Verfahren zu gestalten wäre, mit dem auf einfache Weise ein beschichteter dreidimensionaler Glaskeramikartikel herstellbar wäre.

Die Aufgabe der Erfindung besteht darin, ein einfaches Verfahren zur Herstellung einer beschtchtetendreidimensionat verformten Glaskeramikscheibe zu finden, das sich in bestehenden Beschichtungsanlagen auch ohne Anpassung derselben an die spezielle Form der dreidimensional vertormten Glaskeramikscheibe durchrühren lässt.

Diese Aufgabe wird durch das im Patentanspruch 1 beschriebene Verfahren gelöst.

Es konnte gefunden werden, dass sich überraschenderweise eine beschichtete plane Scheibe aus einem zur Bildung von Glaskeramik geeigneten Glas verformen und zu einer dreidimensional verformten Scheibe keramisieren lässt, ohne dass die Beschichtung beschädigt oder ihre Funktion verlieren würde.

Die für Kamin- und Ofensichtscheiben verwendete Glaskeramik hat üblicherweise einen linearen thermischen Ausdehnungskoeffizienten von -2·10⁻⁶K⁻¹ bis 2·10⁻⁶K⁻¹ und ist in großer Vielzahl von zahlreichen Herstellern bekannt und erhältlich. In der Regel handelt es sich um Glaskeramik aus dem System Li₂O/Al₂O₃/SiO₂ enthaltend z.B. 55 - 80 Gew.-% SiO₂, 12 - 27 Gew.-% Al₂O₃, 3 - 8 Gew.% Li₂O und 3 - 9 Gew.% Keimbildner wie TiO₂, ZrO₂ sowie ggf. noch Oxide der Alkalien, Erdalkalien, Zink, Phosphor, Bor und dergleichen.

Nach der Beschichtung wird das Grünglas verformt und keramisiert. Diese Verformung kann gleichzeitig mit der Keramisierung erfolgen. Dieses Verfahren bietet sich dann an, wenn die zu erzeugende Glaskeramikscheibe nur geringfügig und mit sanften Übergängen verformt werden soll. Die Grünglasscheibe wird auf eine Negativform gelegt und sinkt während des Keramisierens in die Form. Scharfkantige dreidimensional verformte Scheiben lassen sich allerdings durch dieses thermische Senken nicht herstellen, da bereits während der Keramisierung die Kristallisation beginnt und die Glasscheibe dadurch immer steifer wird.
Für scharfkantige Formen der Glaskeramikscheibe wird das Grünglas erweicht und mittels Krafteinwirkung verformt oder gebogen und anschließend wird die verformte bzw. gebogene Scheibe keramisiert.

Die Beschichtung kann nach allen bekannten Verfahren aufgebracht werden, z.B. durch Sputtern, Aufdampfen, CVD (Chemical Vapor Deposition), auch plasmaunterstützt, oder nach dem Sol-Gel-Verfahren. Das Sol-Gel-Verfahren ist besonders bevorzugt.
Die Beschichtung besteht im Allgemeinen und in bekannter Weise aus einem Interferenzschichtsystem aus metalloxidischen Schichten, wobei abwechselnd hoch- und niedrig brechende Schichten aufgebracht werden. Besonders häufig werden TiO₂- und SiO₂-Schichten verwendet, jedoch finden auch Schichten aus Nitriden und Oxinitriden Verwendung. Für einen ausreichenden Effekt genügt im Allgemeinen ein Schichtenpaket aus drei Schichten, für besondere Effekte können auch Schichtenpakete mit mehr (bis zu 12) Schichten aufgebracht werden. Als Schichtenmaterial kommen natürlich auch noch andere Verbindungen in Frage, z.B. als hochbrechendes Material ZnO, ZrO₂, SnO₂, Nb₂O₅, Si₃N₄, Mischkristalle, in denen die einzelnen Bestandteile in unterschiedlichen Anteilen vorliegen, wie z.B. SnₓZn_{y}O_{z}, Si_{X}Ti_{Y}O_{z} usw., als niedrig brechendes Material außer SiO₂ noch Siliciumoxinitrid und/oder Oxicarbid, gemischtes Silicium-Aluminium-Oxid und dergleichen. Die Schichtenmaterialien sind alle für diese Zwecke wohlbekannt. Je nach Aufbau und Schichtdicke, die im Allgemeinen zwischen λ/4 und λ/2 (λ = mittlere Wellenlänge des Lichts) liegt, können Schichtpakete erzeugt werden, die reflektieren, entspiegelnd wirken oder selektiv bestimmte Wellenlängen des Lichts zurückhalten oder durchlassen. Für die Reflexion der IR-Strahlung kann zusätzlich oder allein insbesondere eine ITO-Schicht Verwendung finden.

Zur Erzeugung des gewünschten Effekts darf bei reflexiven Schichten keine Totalreflexion eintreten, da ansonsten die hinter der Scheibe befindliche Flamme nicht mehr sichtbar wird. Die Schichten werden daher teilreflektierend erzeugt, wie das z.B. auch bei teildurchlässigen Spiegeln oder Fensterscheiben (sogenannten Spionagespiegeln oder Beobachtungsspiegeln in Kaufhäusern) der Fall ist.

Die Scheibe kann neben ihrer Beschichtung auch noch mit einer Grundeinfärbung oder Tönung versehen sein, die bekanntermaßen durch Zugabe von färbenden Oxiden bei der Herstellung des Grünglases erreicht wird. Weit verbreitet sind derzeit Grundeinfärbungen von bernsteinfarben bis braun sowie grau in verschiedenen Intensitäten.

Als Beschichtungsverfahren wird die Beschichtung mittels des Sol-Gel-Verfahrens bevorzugt. Dieses Beschichtungsverfahren ist aufgrund seines geringen Aufwandes insbesondere zur Erzeugung von Interferenzschichtsystemen, die aus mehreren Schichten bestehen, geeignet. Das Sol-Gel-Verfahren ist seit Jahrzehnten bekannt und wird in großem Umfang technisch eingesetzt. Bei dem Sol-Gel-Verfahren werden die Glasscheiben abwechselnd in Lösungen getaucht, die hydrolisierbare Verbindungen von Elementen, die hochbrechende OxidSchichten bilden und in hydrolisierbare Lösungen von Elementen, deren Oxide niedrig brechende Schichten ausbilden, getaucht oder mit solchen Lösungen besprüht. Bei dem Tauchverfahren hängt die Dicke der gebildeten Schicht von der Geschwindigkeit ab, mit der die Scheibe aus der Lösung gezogen wird. Nach jedem Tauchgang wird die gebildete Schicht getrocknet bei Temperaturen bis ca. 120°, danach kann der nächste Tauchgang erfolgen. Ist die nötige Anzahl von Schichten erzeugt, kann das beschichtete Grünglas verformt und keramisiert werden. Bei Temperaturen ab ca. 250° C werden die letzten noch in den Schichten enthaltenen Hydroxyl-Gruppen abgespalten, sowie organische Rückstände ausgetrieben, die Schichten werden eingebrannt, wobei sich das Schichtenpaket unter Ausbildung der Oxidschichten kompaktiert.

Es ist überraschend, dass bei der Keramisierung keine Risse in der Schicht auftreten, was darauf zurückgeführt wird, dass das Grünglas im Verlauf des Keramisierungsprozesses zur Glaskeramik ebenfalls einem Schrumpf unterliegt.

Das Gleiche gilt auch für die nach den anderen erwähnten Verfahren hergestellten Schichtenpakete, die gleichfalls im Verlauf der Keramisierung einer Schrumpfung unterliegen.

Nach dem Sol-Gel-Verfahren lässt sich eine außerordentliche Vielzahl von Metalloxidschichten herstellen. So können z.B. Schichten aus Oxiden folgender Metalle oder deren Gemische erzeugt werden: Mg, Ca, Ba, Sr, Al, Ga, In, Si, Ge, Sn, Be, Te, Ir, Hf, No, Cr, Ta, Mo, W, Mn, Fe, Ru, Co, Rh, Ni, Pd, Zn, Cd, La und der seltenen Erden. Zur Herstellung von Spiegel- oder Entspiegelungsschichten werden jedoch im Allgemeinen TiO₂- und SiO₂-Schichten bevorzugt.

Eine zur Herstellung einer hochbrechenden TiO ₂-Schicht geeignete Lösung besteht z.B. aus einer alkoholischen Lösung von mit Acetylaceton stabilisiertem Tetraethoxititan (15 - 30 g TiO₂/I), in die das Glassubstrat vorsichtig eingetaucht und mit einer Geschwindigkeit von 0,3 bis 0,5 cm·s⁻¹ wieder herausgezogen wird. Das Glassubstrat wird getrocknet und die Sol-Gel-Schicht durch leichtes Erwärmen fixiert. Danach kann das Glassubstrat in eine ähnliche Tetraethoxisilan-Lösung getaucht werden.

Nach dem Fixieren der Schichten ist die Glasscheibe soweit kratzfest, dass sie handhaltbar ist. Das ist von großem Vorteil, weil es damit auch möglich wird, dass große Scheiben beschichtet werden können, die erst vor dem Keramisierungsschritt in Scheiben der für die Keramisierung erforderlichen Größe, d.h. für das gewünschte Endprodukt, unterteilt werden. Diese Möglichkeit und die Tatsache, dass für das Einbrennen der Schichten keine gesonderte Energie aufgebracht werden muss, da die für die Keramisierung ohnehin erforderliche Energie mitgenutzt wird, machen das Sol-Gel-Verfahren besonders wirtschaftlich.

## Patentansprüche

1. Verfahren zur Herstellung einer beschichteten dreidimensionalen verformten Scheibe aus Glaskeramik, **dadurch gekennzeichnet, dass** man eine plane Scheibe aus einem zur Bildung von Glaskeramik geeigneten Vorläuferglas (Grünglas) mittels des Sol-Gel-Verfahrens beschichtet und anschließend das Vorläuferglas verformt und zu der Glaskeramik keramisiert.

2. Verfahren nach Anspruch 1, **dadurch gekennzeichnet, dass** man das Vorläuferglas erst verformt und in einem weiteren Verfahrensschritt keramisiert.

3. Verfahren nach Anspruch 1, **dadurch gekennzeichnet, dass** man die Verformung gleichzeitig mit der Keramisierung vornimmt.

4. Verfahren nach einem der Ansprüche 1 bis 3, **dadurch gekennzeichnet, dass** man die Scheibe mit einer Reflexionsschicht, einer Entspiegelungsschicht oder einer Teilreflexionsschicht versieht.

5. Verfahren nach wenigstens einem der vorhergehenden Ansprüche, **dadurch gekennzeichnet, dass** man die Scheibe mit einem Interferenzschichtsystem versieht.

6. Verfahren nach Anspruch 5, **dadurch gekennzeichnet, dass** man das Interferenzschichtsystem aus abwechselnd hoch und niedrig berechenden anorganischen Verbindungen, insbesondere Oxiden des Titan und Siliciums erzeugt.

7. Verfahren nach Anspruch 1, **dadurch gekennzeichnet, dass** das Einbrennen der Sol-Gel-Schichten gleichzeitig mit der Keramisierung erfolgt.

## Claims

1. Process for producing a coated three-dimensional shaped plate composed of glass-ceramic, **characterized in that** a flat plate composed of a precursor glass (green glass) suitable for formation of glass-ceramic is coated by means of the sol-gel process and the precursor glass is subsequently shaped and ceramized to give the glass-ceramic.

2. Process according to Claim 1, **characterized in that** the precursor glass is firstly shaped and ceramized in a further process step.

3. Process according to Claim 1, **characterized in that** the shaping is carried out simultaneously with the ceramization.

4. Process according to any of Claims 1 to 3, **characterized in that** the plate is provided with a reflection layer, an antireflection layer or a partial reflection layer.

5. Process according to at least one of the preceding claims, **characterized in that** the plate is provided with an interference layer system.

6. Process according to Claim 5, **characterized in that** the interference layer system is produced from alternate inorganic compounds having high and low refractive indices, in particular oxides of titanium and silicon.

7. Process according to Claim 1, **characterized in that** the baking of the sol-gel layers is carried out simultaneously with the ceramization.

## Revendications

1. Procédé de fabrication d'un disque déformé tridimensionnel revêtu en vitrocéramique, **caractérisé en ce qu'**un disque plan en un verre précurseur (verre vert) approprié pour la formation de vitrocéramique est revêtu par le procédé sol-gel, puis le verre précurseur est déformé et céramisé pour former la vitrocéramique.

2. Procédé selon la revendication 1, **caractérisé en ce que** le verre précurseur est tout d'abord déformé, et céramisé lors d'une étape de procédé ultérieure.

3. Procédé selon la revendication 1, **caractérisé en ce que** la déformation est réalisée simultanément à la céramisation.

4. Procédé selon l'une quelconque des revendications 1 à 3, **caractérisé en ce que** le disque est muni d'une couche de réflexion, d'une couche antireflet ou d'une couche de réflexion partielle.

5. Procédé selon au moins l'une quelconque des revendications précédentes, **caractérisé en ce que** le disque est muni d'un système de couches d'interférence.

6. Procédé selon la revendication 5, **caractérisé en ce que** le système de couches d'interférence est formé à partir de composés inorganiques hautement et faiblement réfractifs en alternance, notamment d'oxydes de titane et de silicium.

7. Procédé selon la revendication 1, **caractérisé en ce que** la cuisson des couches sol-gel a lieu simultanément à la céramisation.
